# EUROPÄISCHE PATENTANMELDUNG

(11) **EP 1 395 040 A1**
(43) Veröffentlichungstag der Anmeldung: **03.03.2004**
(21) Anmeldenummer: 02019431.2
(22) Anmeldetag: 30.08.2002
(51) Int. Cl.: H04N 1/44, H04K 1/00

(54) **Verfahren und Vorrichtung zur dekryptionssicheren Übertragung von Daten**

(71) Anmelder: Rheinische Friedrich-Wilhelms-Universität Bonn, 53115 Bonn (DE)
(72) Erfinder: Dr. Rolf, Eckmiller, 41468 Neuss (DE); Oliver, Baruth, 53227 Bonn (DE); Dirk, Neumann, 53757 Sankt Augustin (DE)
(74) Vertreter: Hilleringmann, Jochen, Dipl.-Ing.

(57) **Zusammenfassung**

Die aus Vorrichtungen und Verfahren bestehende Erfindung betrifft eine Encryption Einheit (EU), welche durch spatio-temporale Filter mit nicht eindeutig umkehrbarer Funktion und durch einen separat übermittelten Datensatz (MV) spatiale Muster in rein temporale Muster ohne spatiale Funktionsanteile wandeln kann und eine Decryption Einheit (DU), welche ihre Encryptor-spezifische Decryption-Funktionsfähigkeit zunächst in einem Lernvorgang in Interaktion mit einer spezifischen Encryption Einheit entfaltet und anschliessend empfangene, rein temporale Muster in Kenntnis des auch zur Encryption verwendeten, separat übermittelten Datensatzes (MV) wieder in spatiale Muster zurückwandeln kann.

## Beschreibung

Die Erfindung betrifft ein Verfahren und eine Vorrichtung zur dekryptionssicheren Übertragung von Daten. Insbesondere betrifft die Erfindung ein Safe Communication System mit selbstentwickelnder verschlüsselungsspezifischer Entschlüsselung (Safe Communication System with Self-Evolving Encryptorspecific Decryption -SCS).

### Stand der Technik

1. Es sind Verschlüsselungsverfahren bekannt, die auf mathematischer Basis funktionieren. Es gibt symmetrische (DES, AES, IDEA), asymmetrische (RSA, Diffie-Hellmann, EI-Gamal) Verfahren, Mischformen (PGP) sowie One-Time- Pads.
2. Es sind Systeme zur Verschlüsselung von spatial Patterns bekannt (z.B. Secure Fax, Pay-TV) US5737094 (09AUG95), GB2366468 (25AUG00), US6335990 (04DEC97).
3. Es sind Systeme zur Entschlüsselung von temporal Patterns bekannt WO0247356 (07DEC00), WO013009 (15OCT99).
4. Es sind Verschlüsselungs-/Entschlüsselungssysteme unter Verwendung eines zusätzlichen Keys auf Verschlüsselungs-/ Entschlüsselungsseite bekannt US6219794 (21APR97), EP1122910 (15OCT99).
5. Es sind lernfähige Algorithmen (Neuronale Netze, Machine Learning) in Verwendung für Ent- bzw. Verschlüsselung bekannt.
6. Es sind spatio-temporale Filter bekannt, die z.B. in der digitalen Bild-/Filmbearbeitung eingesetzt werden. EP1209624 (27NOV00), US20001019588 (06MAR00), US20010043722 (12MAR01), US20020028025 (18JUL01).
7. Es sind Aufnahme-Systeme für 2D oder 3D spatial Patterns bekannt (Kamera, CT-Scans in der Hirntomographie, Satelliten-basierte Überwachungssysteme).

### Nachteile des Standes der Technik

1. Das Abhören Encryption-Output Signalen erlaubt bei vielen weit verbreiteten Encryption-Systemen vielfältige Möglichkeiten von nicht-autorisierten, jedoch erfolgreichen Entschlüsselungsangriffen, insbesondere da die spatiale Information weitgehend erhalten bliebt, bzw. dass Verschlüsselungsprotokoll bekannt ist bzw. sogar mitübertragen wird. (z. B. Abhören von Mobiltelefonen, Entschlüsselung von Pay-TV, Passwortsuche im Internet).
2. Encryption- und Decryptiongeräte sind austauschbar und damit kann einer Gegenstation leicht ein Partner vorgegaukelt werden (Mobiltelefon, IP- Masquerading, wobei z.B. einem Mobiltelefon auch mit ISDN-Technologie die falsche Identität einer Zell-Relais-Station vorgespiegelt wird, Man-In-The-Middle Angriffe).
3. Ein Schlüsseldiebstahl führt bei austauschbaren Encryption- und Decryptiongeräten zum Verlust der Sicherheit.
4. Passwörter können durch Brute-Force-Attacken, also dem Ausprobieren aller Kombinationen durch schnelle Rechner, gefunden werden.
5. Es gibt aus prinzipiellen Gründen häufig die Gefahr bzw. bekannte Option von sog. ,Back doors' und ggf. 'Master keys', die die Verschlüsselungssicherheit des Individuum aus Datenschutz- und Privatspären-Schutz Gründen mit einem wesentlichen Vorbehalt belasten. Also muss der Benutzer von vornherein damit rechnen, dass sich Institutionen oder Einzelne ohne seine Kenntnis oder gar Zustimmung insbesondere im Falle öffentlicher Nachrichtenübertragungs-Strukturen wie Telefon oder Internet Zugang zu seiner vermeintlich vertraulichen Datenübertragung verschaffen.
6. Die Entschlüsselung der mit grosser Verbreitung verwendeten Verschlüsselungs-Algorithmen durch neuartige mathematische Verfahren (die ggf. einigen Institutionen bereits bekannt sind) auf einem verkürzten Weg (Short Cut) ist mathematisch nicht auszuschließen.
7. Die Akquisition von spatial Patterns ist weitestgehend auf geometrische 2D oder 3D Objekte beschränkt und umfasst typisch keine mehrdimensionalen spatial Patterns mit nicht-geometrisch, physikalischen Dimensionen, z.B. Gaswolken mit bestimmten Molekülkonzentrationen, chemische Molekülkonzentrationen mit Geschmacksbewertungen, deren Aufnahme und sicher verschlüsselte Übertragung für diverse Anwendungen von Bedeutung ist.

### Erfindung

Diese Nachteile sollen durch die hier offenbarte Erfindung beseitigt oder zumindest erheblich reduziert, und zwar gemäß Anspruch 1 bzw. Anspruch 10. Vorteilhafte Ausgestaltungen der Erfindung sind Gegenstand der einzelnen abhängigen Ansprüche.

### Definitionen der verwendeten Begriffe

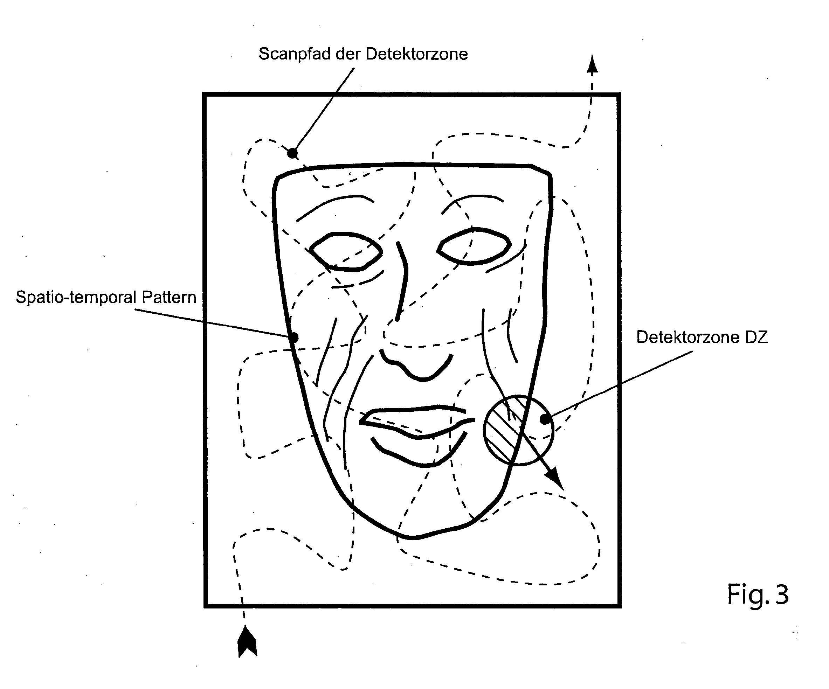

1. Spatiale Dimensionen: alle physikalisch messbaren Dimensionen, wie z.B. Ortskoordinaten, Temperatur, Lautstärke, Druck, Leitfähigkeit, Leuchtdichte, Farbwerte, chemische Stoffkonzentrationen, Radioaktivität, Feldstärken von elektrischen, magnetischen, und gravitativen Feldern, mechanische Wellen, wie z.B. Erdbebenwellen, meteorologischen Daten.
2. Temporale Dimension: Zeit t.
3. Temporales Filter: eine 'Single In - Single Out' Filterstruktur, die einen temporalen Daten-Eingangsstrom mit internen Algorithmen bearbeitet und als ebenfalls temporalen Daten-Ausgangsstrom wieder ausgibt, z.B. ein Tiefpass in der Nachrichtentechnik.
4. Spatiales Filter: Eine 'Multiple In - Multiple Out' Filterstruktur, die über ein mehrdimensionales Eingangsfeld (Detektor Zone, s. Punkt 14) Daten aus einer spatialen Dimension (s. Punkt 1) aufnehmen kann, diese verarbeitet und als mindestens eindimensionalen Datenwert in einen zugehörigen Ausgang ausgibt, z.B. Gaborfilter, Kantenfilter in der Bildverarbeitung.
5. Spatio-temporales Filter (ST-Filter): Eine Filterstruktur mit spatialen und temporalen Filtereigenschaften, die über ein mehrdimensionale Eingangsfeld (Detektor Zone, s. Punkt 14) Daten aus mehreren spatialen Dimensionen (s. Punkt 1) aufnehmen kann, diese verarbeitet und als rein temporalen Datenstrom über einen zugehörigen Ausgang ausgibt. Eine minimale Realisierung eines ST-Filters besteht darin, dass mindestens zwei Ortsfunktionswerte von der Detektor Zone (DZ) gemessen werden und dem ST-Filter als Eingabe dienen und auf mindestens zwei zeitlich getrennte temporale Ausgabewerte abgebildet werden, wodurch die Ortsinformation extrahiert wird.
6. Ortsfunktion: mehrdimensionale Funktion die von spatialen Dimensionen (s. Punkt 1) abhängt f(x₁,...,x_{N}).
7. Zeitfunktion: Funktion, die nur von der Zeit abhängt: f(t).
8. Örtfunktionsdimensionen: x₁,...,x_{N} (s. Punkt 1).
9. Spatial Pattern: mehrdimensionales Muster, das von spatialen Dimensionen (s. Punkt 1) abhängt, synonym zu Ortsfunktion (s. Punkt 6).
10. Spatio-temporales Ereignis: synonym "Spatial Pattern" (s. Punkt 9).
11. Temporal Pattern: zeitliches Muster, synonym zu Zeitfunktion (s. Punkt 7).
12. Brute Force' Attacke: Entschlüsselungsangriff auf eine verschlüsselte Botschaft, deren Ver-/Entschlüsselungsverfahren bekannt ist, durch systematisches Ausprobieren aller Schlüsselkombinationen.
13. Vektor: mathematische Struktur, die mehrere Dimensionen haben kann, z.B. ein Ortsverktor O (x,y,z) .
14. Detektorzone (DZ): mehrdimensionale Zone mit Begrenzung des Detektor-/ Messbereiches bzgl. der jeweiligen spatialen Dimensionen (s. Punkt 1) zur Aufnahme von Spatial Patterns (s. Punkt 9) als Eingangsdaten für die Spatio-temporalen Filter.
15. Filteralgorithmus: Rechenvorschrift, die die Abbildung zwischen Eingangsdaten und Ausgangsdaten in einer Filterstruktur festlegt, z.B. Tiefpassalgorithmus.
16. Filterparameter: Parameter, der die Abbildung zwischen Eingangsdaten und Ausgangsdaten in einer Filterstruktur beeinflussen kann, z.B. Grenzfrequenz eines Tiefpasses.
17. Scanpfad: mehrdimensionaler, von außen vorgebbarer Pfad durch den Raum der Spatial Patterns, auf dem sich eine Detektorzone (DZ) zur Datenaufnahme bewegt, z.B. ein Scanpfad (s. Fig. 3) im 2D -Ortsraum ist dargestellt durch den zeitabhängigen Ortsvektor (x(t),y(t)).

### Ziele der Erfindung

1. Erzeugung eines hochwertigen, Personen-bezogen betriebenen Systems zur geschützten Übertragung räumlich, oder allgemein mehrdimensional verteilter physikalischer Ereignismuster.
2. Encryption von spatialen Mustern durch Extraktion der spatialen Musterinformation und Wandlung in rein temporale Muster ohne spatiale oder Decryption-Information.
3. Decryption der rein temporalen Muster durch lernfähige Algorithmen unter Verwendung von Teilwissen über den Encryption Prozess.
4. Verwendung von Personen-bezogenen Daten (Person generated key), die für die Encryption und Decryption notwendig, jedoch nicht hinreichend sind.
5. Personen-bezogener Datenschutz in der Medizin, u.a. für Neuroprothesen und das Management von Patientendaten.
6. Personen-bezogene Daten-Übertragungssicherung in Wirtschaft und Technik, u.a. Remote Secure Authentication, Electronic Banking.
7. Personen-bezogene Datenübertragungssicherung in Wirtschaft und Technik, u.a. Secure FAX Communication, Secure Video Communication, Secure Internet Communication.

### Vorteilhafte Ausgestaltungen

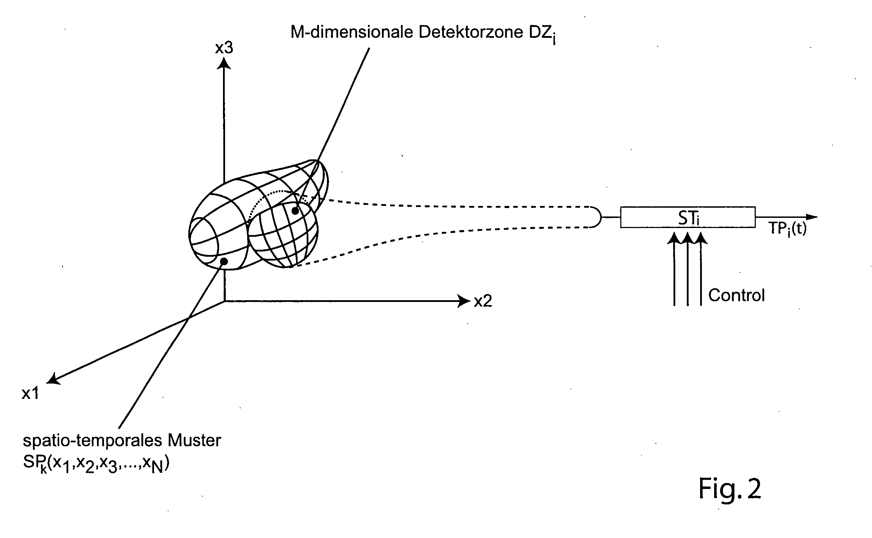

Insbesondere ist es vorteilhaft, dass eine von einem einzelnen spatio-temporalen Filter (ST-Filter, s. Fig. 2) erzeugte rein temporale Ausgangsfunktionen (TP(t)) definitionsgemäß nicht eindeutig in die zugehörige Ortsfunktion (SP) an der Detektor Zone (DZ) des ST-Filters rückgewandelt werden kann, wodurch eine extrem hohe Verschlüsselungs-Sicherheit entsteht, wie beim nicht rückgängig machbaren Verlassen eines Raumes durch eine Falltür (Trap Door).

Ein weiterer Vorteil besteht darin, dass alle TP(t)-Datensätze nur verschlüsselt übertragen oder zwischengespeichert werden, so dass ein unberechtigter Datenzugriff, z.B. bei Verwendung öffentlicher Übertragungssysteme/ -netze, wie z.B. Telefonnetze, Internet, Virtual Privat Nets (VPN), Funknetze, sowie auch lokale Übertragungsnetze, wie Intranet, auch durch besonders autorisierte Fachkräfte, z.B. Systemadministratoren, nicht möglich ist.

Ein weiterer Vorteil besteht darin, dass die Abbildungsfunktion (M1) von SP's am EU-Eingang in TP's am EU-Ausgang sowohl von den individuell und extern unzugänglich festgelegten Algorithmen seiner ST-Filter, als auch von MV abhängt, wodurch die Verschlüsselungs-Sicherheit von EU zusätzlich vergrößert wird, ferner eine Authentifizierung zum Betrieb von EU gegeben ist und schließlich, garantiert wird, dass eine spätere Decryption nur bei Kenntnis von MV erfolgen kann.

Ein weiterer Vorteil besteht darin, dass EU für alle Parameter aller intern verfügbaren ST-Filter Festlegungen über MV zur Sicherung eines jederzeit definierten EU-Betriebes verlangt.

Ein weiterer Vorteil besteht darin, dass Encryption und Decryption an verschiedenen Orten stattfinden können. Ggf. kann die Decryption zu einem Zeitpunkt durchgeführt werden, der deutlich hinter dem Übertragungszeitpunkt von TP liegt. CC kann auch bidirektional sein.

Ein weiterer Vorteil besteht darin, dass auch algebraisch-analytische mathematische Strukturen sowie Zahlenstrukturen, wie sie z.B. in Datenbanken der Geldwirtschaft oder Buchhaltung vorliegen, leicht in spatial Patterns umformatiert werden und dann mit EU und MV verschlüsselt werden können.

Ein weiterer Vorteil besteht darin, dass biometrische Signale des Benutzers automatisch und extern unzugänglich in einen genau zu EU passenden MV umgesetzt werden.

Ein weiterer Vorteil besteht darin, dass die Encryption durch zeitabhängiges Durchfahren des gesamten Raumes mit SP-Anteilen mit dem DZ nur eines ST-Filters erfolgen kann (s. Fig. 3), und so ein im Falle mehrerer ST-Filter erforderlicher Multiplex-Prozess in PT eingespart wird.

Ein weiterer Vorteil besteht darin, dass der EU-Output TP(t) prinzipiell nicht decrypt-fähig ist, da die ST-Filter keine eindeutige Abbildung leisten, und so die Übertragung der Information absolut sicher vor Entschlüsselung ist.

Ein weiterer Vorteil besteht darin, dass EU eine vollständige Extraktion spatialer Information bewirkt.

Die Decryption benötigt erfindungsgemäß drei separate Schritte:
1. DM-Programmierung erfordert unbedingt Zugang zum korrespondierenden EU.
2. Rekonstruktion der einzelnen ST-Filter Outputs TPᵢ(t) durch das Sorter Module SM im Pattern Receiver PR.
3. eine iterative Umsetzung aller TPᵢ(t) in SPₒᵤₜ(x₁,...x_{N}) durch einen Lernalgorithmus geleistet wird.

Ein weiterer Vorteil besteht darin, dass die Encryption prinzipiell nicht backdoorfähig ist.

Ein weiterer Vorteil besteht darin, dass wegen der ohne einen vordefinierten Encryption-Algorithmus durchgeführte Verschlüsselung mit ST-Filtern, ein möglicher "Brute Force Angriff" auf eine verschlüsselte Datei TP(t) nicht die für andere, als sicher geltende Verschlüsselungsverfahren, mögliche Erfolgsprognose bei einem gegebenen Aufwand erlaubt.

Eine vorteilhafte Ausgestaltung der Encryption Unit (EU) besteht darin, dass
- die Encryption Unit als portabler Computer (PC), als Pocket PC oder als ein Embedded PC realisiert ist, dass
- die Spatio-Temppralen-Filter (ST-Filter) als Software-Algorithmen als Kombination von spatialen Filter-Komponenten mit charakteristischen Ortsfrequenz-Übertragungsfunktionen sowie von temporalen Filter-Komponenten mit charakteristischen Zeitfrequenz-Übertragungsfunktionen, oder in einer weiteren bevorzugten Ausgestaltung als spatiotemporale 'Wavelet'-Funktionen oder Gaborfunktionen auf einem Digital-Signal-Processor (DSP) bevorzugt als diskrete, digitale Filter implementiert sind, dass einzelne ST-Filter mit
- Detektor-Meßaufnehmer Modulen zur Messung diverser physikalischer Parameter im Messbereich einer Detektorzone (DZ) am Eingang vom ST-Filter ausgestattet sind und dass diese Messaufnehmer mit einer zugeordneten
- Detektorzone (DZ) z.B. für Schallereignisse als Richtmikrofon, für Gasmolekül als Chemosensor-Array, für optische Daten als aktiv-bewegliche Kamera, für radioaktive Strahlung als Strahlungsdetektor-Array, für elektrische, magnetische und gravitative Felder als Feldmessgeräte-Arrays bzw. Antennen-Arrays, für mechanische Wellenfronten (z.B. Erdbeben Frühwarnung, Erdölexploration) als Mechano-Detektor-Arrays und für meteorologische, oder hydrologische Verteilungen als Sensor-Array ausgestattet sind.

Eine vorteilhafte Ausgestaltung der Encryption Funktion von EU besteht darin, durch Wahl von Zahl und Algorithmen der verwendeten ST-Filter einen Teil der Encryption Eigenschaften festzulegen und durch individuelle Zuordnung von Teildaten des MV als spatialer und temporaler Parametersatz zu den einzelnen ST-Filtern einen anderen Teil der Encryption Eigenschaften festzulegen und durch eine derartige Verteilung der Festlegung der Encryption-Funktion in einer spezifischen EU einerseits durch EU-interne ST-Filter Eigenschaften und andererseits durch einen EU-externen Datensatz (MV) die Encryption Funktion gegen verschiedene Angriffsarten zu sichern.

Eine vorteilhafte Ausgestaltung für das Encryption Module (EM) besteht darin, dass für die Verschlüsselung des spatialen Input Pattern's SP_{In}(x₁, ..., x_{N}) durch eine Pluralität von simultan arbeitenden spatio-temporalen Filtern (ST-Filtern), deren spatiale und temporale Parameter jeweils für die Dauer der Verschlüsselung konstant gehalten werden, jeder Ort (allgemein eine spatiale, physikalische Dimension) von SP_{In} durch eine Pluralität von ST-Filtern erfasst wird, oder in einer weiteren vorteilhaften Ausgestaltung die Verschlüsselung des spatialen Input Patterns SP_{In}(x₁, ..., Xₙ) durch mindestens ein ST-Filter mit für die Dauer der Verschlüsselung mehrfach veränderten spatialen und ggf. temporalen Parametern in (s. Fig. 3) jeder Ort von SP von einem DZ eines ST-Filters erfasst wird.

Eine vorteilhafte Ausgestaltung für den Pattern Transmitter (PT) besteht darin, dass PT am Ausgang TP(t) zur Übertragung nach dem Stand der Technik in digitaler Codierung über eine Signalleitung an DU realisiert, und dass Pattern Transmitter (PT) mit einem Multiplexer Modul (MM) und einem durch MV festgelegten Permutations-Algorithmus (PA) ausgestattet ist, wobei bevorzugt die von PA vorgegebene Sequenz der Abfrage aller ST-Ausgänge (TPᵢ(t)) durch MM für jeden Abfragezyklus neu festgelegt wird, so dass in dieser bevorzugen Ausführung TP(t) eine Sequenz von TPᵢ(t)-Werten darstellt, in welcher die ST-Filter-Kanal Reihenfolge der übertragenen Abtastwerte von MM-Zyklus zu MM-Zyklus variiert.

In einer weiteren vorteilhaften Ausgestaltung bei dem Betreib von CC zwischen PT und PR besteht darin ,dass der Datenaustausch unter Verwendung von PR in DU als Signalgeber bzw. Sender und von PT in EU als Signalempfänger erfolgen kann, z.B. für eine fehlerfrei Datenübertragung.

In einer weiteren vorteilhaften Ausgestaltung von PT wird TP(t) als Daten-kodiertes Signal für eine standardisierte Datenübertragung in ein Telefonnetz realisiert, wobei bevorzugt die Datenkodierung nach dem Stand der Technik für eine Übertragung von Fax-Datenpaketen erfolgt, damit der Fax-Sendebetrieb in Kopplung mit einer EU-Vorrichtung und der Fax-Empfangsbetrieb in Kopplung mit einer zugehörigen DU-Vorrichtung benutzerspezifisch durch MV autorisiert und verschlüsselt erfolgen kann.

In einer weiteren vorteilhaften Ausgestaltung zum verschlüsselten Fax-Betrieb wird der Fax-Empfänger durch Ausdrucken eines Senderdeckblattes zunächst über eine verschlüsselte Fax-Übermittlung informiert und der Fax-Empfänger kann in einer folgenden bevorzugten Ausführung durch Inbetriebnahme mit Hilfe von MV des gekoppelten DU den entschlüsselten Faxdatenausdruck veranlassen.

In einer weiteren vorteilhaften Ausgestaltung von EU mit PT und DU mit PR sowie MV wird TP(t) nach dem Stand der Technik als eine Internet-fähige Sequenz von Datenpaketen, z.B. mit dem verbreiteten TCP/IP Protokoll vorzugsweise als E-Mail oder als Webseite in der Internet-Sprache: HTML, realisiert.

In einer weiteren vorteilhaften Ausgestaltung von EU mit PT und DU mit PR sowie MV wird TP(t) nach dem Stand der Technik als eine Intranet-fähige Sequenz von Datenpaketen, z.B. mit dem verbreiteten IPX-Protokoll vorzugsweise als Videokonferenz, realisiert.

In einer weiteren vorteilhaften Ausgestaltung von EU mit PT und DU mit PR sowie MV wird TP(t) nach dem Stand der Technik als ein Fernsehübertragungsdatenstrom, z.B. DVB oder Pay-TV, realisiert.

In einer weiteren vorteilhaften Ausgestaltung von EU mit PT und DU mit PR sowie MV wird TP(t) nach dem Stand der Technik in eine Funknetz-fähige Sequenz von Datenpaketen, z.B. mit den verbreiteten Standards Bluetooth, WLAN, UMTS, GSM, GPRS, SCPS oder ISM, realisiert.

In einer weiteren vorteilhaften Ausgestaltung EU mit PT und DU mit PR sowie MV wird die sichere Speicherung und Übertragung von Patientendaten gewährleistet, wobei über individuell einzelnen Dateien zugeordnete Verschlüsslungen (EU-DU Paaren mit MV) der Zugriff auf Nachbardateien verhindert wird.

In einer weiteren vorteilhaften Ausgestaltung verfügt TP über eine Schnittstelle zur Speicherung von TP(t) auf ein Speichermedium nach dem Stand der Technik, vorzugsweise Smartcard, Mediacard, Memorystick, DVD, ZIP, HDD, DAT oder DLT.

Eine vorteilhafte Ausgestaltung eines ST-Filters besteht darin, dass die über die Detektor Zone DZ aufgenommen Daten aus spatialen Dimensionen in einer ersten Berechnungsstufe, vorzugsweise als einer Gaborfilter- oder Wavelet-Transformation, spatial gefiltert werden und in einer zweiten Stufe die Ausgabe der ersten Berechnungsstufe, vorzugsweise als Tiefpass, Hochpass oder Bandpass realisiert, temporal gefiltert wird.

Eine vorteilhafte Ausgestaltung eines ST-Filters besteht darin, dass in EU typisch 100-500 ST-Filter mit überlappenden DZs vorhanden sind, wobei vorzugsweise ein ST-Filter STᵢ typisch 100-500 Ortsfunktionswerte über seine DZᵢ am Eingang aufnimmt und am Ausgang eine Zeitfunktion TPᵢ(t) als diskrete Sequenz von Daten mit einem Datenintervall von typisch 1-10ms während einer Gesamtzeit von typisch 100-500ms abgibt.

Eine weitere vorteilhafte Ausgestaltung eines ST-Filters besteht darin, dass ein ST-Filter eine gewichtete Verknüpfung, vorzugsweise eine Addition, mehrerer einfacher ST-Filter, deren DZs im Eingaberaum überlappen, ist.

Eine vorteilhafte Ausgestaltung des Modulationsvektors MV besteht darin, dass MV vorzugsweise als binäre Sequenz realisiert wird, in welcher Bitbereiche für spatiale ST-Filter-Parameter, temporale ST-Filterparameter, ST-Filter-Adresse, Parameter für den Permutationsalgorithmus PA und Identifikationsparameter festgelegt werden.

Eine vorteilhafte Ausgestaltung zur Erzeugung eines Modulationsvektors (MV) besteht darin, dass die Erzeugung von MV mittels eines separaten Vektorgenerators basierend auf biometrischen personenbezogenen einzigartigen Merkmalen erfolgt, wie z.B. Fingerabdruck, Irisscan, Netzhautscan, Gesichtserkennung, Stimmerkennung, DNA-Scan. Der Vorteil dieser Ausgestaltung besteht darin, dass der Systembenutzer sich keine Zeichenfolgen merken muss, dass der Benutzer diese Merkmale immer mit sich führt und dass der Eingaberaum für diese Merkmale sehr hochdimensional ist.

Eine vorteilhafte Ausgestaltung zur Erzeugung von MV ist weiterhin, dass MV mit nach dem Stand der Technik verschlüsselt wird und von DUC bzw. EUC vor Gebrauch entschlüsselt wird, so dass Rückschlüsse von MV auf die verwendete Filterparameter/-algorithmen verhindert werden.

Eine vorteilhafte Ausgestaltung für den Modulation Vektor (MV) besteht darin, dass für die Verschlüsselung von spatialen Inputpattern SPᵢₙ(x₁, ..., x_{N}) mit wenigen ST-Filtern, MV während des Verschlüsselungsprozesses mindestens 10mal pro Sekunde geändert wird.

Eine vorteilhafte Ausgestaltung für das Tuning Module (TM) besteht darin, dass das TM mit lernfähigen Algorithmen ausgestattet ist, z.B. Evolutionäre Algorithmen, die die iterative Anpassung der durch das Decryption Modul (DM) geleisteten Abbildung (M2) im Tuning Prozess (F-Tuning) ermöglichen.

Eine vorteilhafte Ausgestaltung für den Tuning Prozess (F-Tuning) besteht darin, dass während des Tuning Prozesses mehrere MVj für das Encryption-Module (EM) gelernt/eingestellt werden können, so dass später während des Betriebszustandes (F-Operation) die internen Einstellungen von EM durch eine Lookup Tabelle innerhalb von EU, ohne das Gesamtsystem nachzulernen, abgerufen werden können und somit der Betriebszustand nicht unterbrochen wird.

Eine vorteilhafte Ausgestaltung für die Decryption Unit (DU) besteht darin, dass:
- DU als portables Notebook, oder als handlicher Personal Digital Assistant (PDA) mit optionaler Verbindung zu einem PC mit I/O-Schnittstellen realisiert ist, dass der
- Pattern Receiver (PR) korrespondierend zu der in PT verwendeten Übertragungstechnik, nach dem Stand der Technik, eine Empfangselektronik für TP(t) umfasst, dass in PR ein
- Sorter Modul (SM) als Software-Algorithmus realisiert wird, der in einer bevorzugten Ausführung die empfangene Zeitfunktion TP(t) mithilfe des durch MV festgelegten Permutations- Algorithmus (PA), der bereits in PT benutzt wurde, die Sortierung (De-Multiplexen) in parallele Zeitfunktionen TPᵢ(t) ausführt, dass das
- Decryption Module (DM) als lernfähiger universeller Funktionsapproximator bevorzugt als Neuronales Netz: in einer bevorzugten Ausführung z.B. als Multilayer-Perceptron (MLP) mit einer Eingangsschicht (Input Layer) mit mindestens n-Eingangsneuronen zur Dateneingabe der n TPᵢ(t), mit einer verdeckten Schicht (Hidden Layer) und mit einer Ausgangsschicht (Output Layer) mit parallelen Datenausgängen für die Abgabe der spatialen Signalparameter zur Erzeugung von SPₒᵤₜ(X₁, ..., X_{N}) realisiert ist, dass
- DU bevorzugt zur Erzeugung eines geometrischen räumlichen Musters z.B. als Inka-Maske mit einem Drucker ausgestattet ist, der die Ausgangssignale von DM in eine Papierkopie von SP umsetzt.

### Beschreibung der Zeichnung

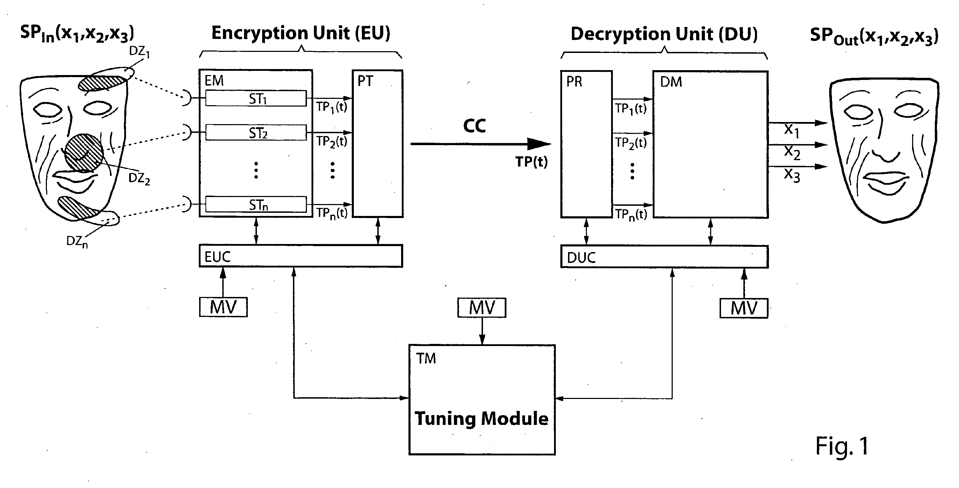

Fig. 1 zeigt das Blockschaltbild des grundsätzlichen Aufbaus einer möglichen Realisierung eines "Safe Communication System" SCS nach den Ansprüchen 1 und folgenden. Man erkennt das eine Input-Ortsfunktion SP_{In}(x₁,x₂,x₃), hier eine Inka-Maske, durch eine Pluralität von n verschieden geformten Detektor-Zonen (nachfolgend DZ) erfasst wird und dass die Information in diesen DZs von den im Encryption Module (nachfolgend EM) vorhandenen n Spatio-Temporalen Filtern (nachfolgend ST-Filter) aufgenommen und verarbeitet wird. Durch die Arbeitsweise der ST-Filter wird jegliche spatiale Information von der Input-Ortsfunktion SP_{In}(x₁,x₂,x₃) extrahiert, so dass der Ausgang eines ST-Filters nur noch temporale Information TPᵢ(t) enthält und somit ein Rückschluss von der Ausgangszeitfunktion TPᵢ(t) eines ST-Filters auf die ursprüngliche Eingangsortfunktion definitionsgemäß nicht mehr möglich ist. Diese Pluralität von Ausgangszeitfunktionen TPᵢ(t) wird durch ein in Pattern Transmitter (nachfolgend PT) enthaltenen Multiplex-Verfahren in eine einzelne Ausgangszeitfunktion TP(t) gewandelt, welche dann die von der Encryption Unit zur Decryption Unit über einen Communication Channel (nachfolgend CC) übertragen wird.
Man sieht, dass das EM und der PT über eine Kontrolleinheit (nachfolgend EUC) mit Hilfe eines Modulationsvektors (nachfolgend MV) in ihrer Arbeitsweise beeinflusst werden. Dies kann bei den ST-Filtern jeweils durch eine MV-basierte Festlegung der verwendeten temporalen Parameter, z.B. Eckfrequenz und der verwendeten spatialen Parameter, z.B. breite einer Gaußfunktion, Ort der Detektor-Zone erfolgen, und bei einen im PT benutzten Multiplexer durch eine MV-basierte Festlegung der sich zyklisch verändernden Permutationsreihenfolge erfolgen.

Man sieht, dass die Decryption Unit (nachfolgend DU) einen Patternreceiver (nachfolgend PR) enthält, der die empfangenen Ausgangszeitfunktion TP(t) durch einen geeigneten, zu dem in PT verwendeten Multiplexer korrespondierenden, De-Multiplexer, dessen Funktionsweise ebenfalls durch MV bestimmt ist, in eine Pluralität von n Ausgangszeitfunktionen TPᵢ(t) umwandelt. Diese n Ausgangszeitfunktionen werden dann am Eingang des Decryption Modules (nachfolgend DM) zur Verfügung gestellt. In DM befindet sich eine lernfähige Struktur, die vorzugsweise als ein Multilayer Perceptron (kurz MLP) realisiert wird. Diese lernfähige Struktur realisiert nach erfolgreichem Tuning die eigentliche Entschlüsselung und erhält als Zusatzinformation für die Rückgewinnung der ursprünglichen Input-Ortsfunktion SP_{In}(x₁,x₂,x₃) ein MV welches in der Tuningphase benutzt wurde.

Man sieht, dass das Tuning Module (nachfolgend TM) über Schnittstellen zu EU und DU Einfluss auf die beiden Module nimmt. Während der Tuningphase wird hierbei die anfänglich nicht für die Rückgewinnung der ursprünglichen Input-Ortsfunktion SP_{In}(x₁,x₂,x₃) geeignete lernfähige Struktur solange verändert, bis dass die Ausgangsortsfunktion SP_{Out}(x₁,x₂,x₃) hinreichender Ähnlich zu der Input-Ortsfunktion SP_{In}(x₁,x₂,x₃) ist. Hierzu wird vorzugsweise ein Evolutionärer Algorithmus für die Parameterfestlegung benutzt. Um möglichst viele MVs zur Verfügung zu stellen, werden in der Tuningphase mehrere MVs für das Tuning bereitgestellt, so dass der Betrieb von DU nach einen Wechsel von MV durch einfaches Nachtrainieren der lernfähigen Struktur, oder durch eine Lookup Tabelle für die Parameter der lernfähige Struktur sichergestellt wird.

Fig. 2 zeigt die schematische Darstellung einer mehrdimensionalen Detektorzone, die hier stellvertretend durch eine dreidimensionale Kugel dargestellt ist, die ein in einem evtl. auch höherdimensionalen Raum eingebettetes spatio-temporale Muster SPₖ(x₁,x₂,...,x_{N}), das hier stellvertretend durch ein dreidimensionales Ellipsoid dargestellt ist, abtastet und diese Information an einen ST-Filter zur weiteren Informationsverarbeitung weiterleitet.

Fig. 3 zeigt die Arbeitsweise des DM, welches mit nur einem ST-Filter die gesamte Input-Ortsfunktion (hier eine Inka-Maske) verarbeitet. Hierzu wird die zu einem ST-Filter zugehörige DZ in einem frei definierbaren Scanpfad über die Input-Ortsfunktion geführt, so dass die komplette Input-Ortsfunktion mindestens einmal erfasst wird. Bei dieser Arbeitsweise wird der Scanpfad vorab für jedes in DM vorhandene ST-Filter MV-basiert festgelegt und ändert ortsabhängig die spatialen und temporalen Parameter der verwendeten ST-Filter. Dazu wird MV während der Verschlüsselung diskret verändert, so das MV eine Art Treppenfunktion ist.

## Patentansprüche

1. Safe Communication System (SCS) **gekennzeichnet dadurch, dass** a) eine lernfähige Encryption Unit (EU) bestehend aus einem Encryption Module (EM) und einem Pattern Transmitter (PT) zur Wandlung einer spatialen Eingangsfunktion als Ortsfunktion bzw. Spatial Pattern SP (x₁,...,x_{N}) in eine rein zeitliche Ausgangsfunktion als Zeitfunktion bzw. Temporal Pattern TP(t) ohne zusätzliche Spatial Pattern Anteile vorgesehen ist, wobei erstens EU eine separate Schnittstelle zur EU-Funktionsanpassung (EUC) zugeordnet ist, wobei zweitens die EU Wandler-Charakteristik (M1) von Ortsfunktionen in Zeitfunktionen durch Signale an EUC verstellbar ist, wobei drittens die Ortsfunktionsdimensionen (x₁,...,x_{N}) allgemein physikalische Dimensionen einschliesslich der geometrischen Raumdimensionen umfassen und wobei viertens EU mindestens ein spatio-temporales Filter (ST-Filter) zur Encryption von Spatial Patterns (SP_{In}(x₁,...,x_{N})) am EU-Eingang in reine Temporal Patterns (TP(t)) ohne zusätzliche Spatial Pattern-Anteile am EU-Ausgang zugeordnet ist, wobei erstens einer ST-Filter Ausgangszeitfunktion TPᵢ (t) mehr als eine Eingangsortsfunktion SP_{In} (x₁,...,x_{N}) zugeordnet ist, wobei zweitens jedes ST-Filter (STᵢ) mit einer bezüglich des Messbereiches seiner spatialen Datenaufnahme begrenzten Detektor Zone (DZᵢ) als Eingang für Ortsfunktionen mit oder ohne zusätzlichen Zeitfunktionsanteilen und mit einem reinen Zeitfunktions-Ausgang ohne Ortsfunktionsanteile ausgestattet ist und wobei drittens eine ST-Filterfunktion einerseits durch einen charakteristischen spatialen und temporalen Filter-Algorithmus (FA) und andererseits durch einen über Signale von EUC verstellbaren Filterparameter Vektor (MV) bestimmt wird.

2. Safe Communication System nach Anspruch 1 **gekennzeichnet dadurch, dass** a) TP(t) als Ergebnis einer ST-Filter basierten EU-Funktion nur dann von einer Decryption Unit (DU) wieder in das korrespondierende SP_{In} (x₁,...,x_{N}) rück-gewandelt werden kann, wenn DU zusätzlich zu TP(t) geeignete Information (STI) über die beteiligten ST-Filter erhält, wobei STI separat von TP(t) und vor unberechtigtem Zugang geschützt, an DU übergeben wird, dass b) eine lernfähige Decryption Unit (DU) bestehend aus einem Pattern Receiver (PR) und einem Decryption Module (DM) vorgesehen ist, wobei erstens DU eine separate Schnittstelle zur DU-Funktionsanpassung (DUC) zugeordnet ist und wobei zweitens die DU Wandler-Charakteristik (M2) von Zeitfunktionen in Ortsfunktionen durch Signale an DUC verstellbar ist und wobei drittens der DU für die Rückwandlung einer rein zeitlichen Eingangsfunktion TP(t) ohne zusätzliche Spatial Pattern Anteile in eine korrespondierende spatiale Ausgangsfunktion SPₒᵤₜ (x₁,...,x_{N}) mit hinreichender Ähnlichkeit zu SP_{In} (x₁,...,x_{N}) die ST-Filter Information (STI) als Teil von MV über DUC bereitgestellt wird, dass c) ein Tuning Module (TM) vorgesehen ist, wobei erstens TM Signalverbindungen zu EUC und DUC zugeordnet sind und wobei zweitens TM ein Lernalgorithmus (LA) zugeordnet ist, dass d) ein Tuning-Betriebszustand F-Tuning vorgesehen ist, wobei TM in Verbindung mit EU und DU den Lernalgorithmus (LA) ausführt, wobei erstens mindestens ein SP_{LearnIn}(x₁,...,x_{N}) von EU durch M1 in ein TP_{Learn}(t) verschlüsselt wird, wobei zweitens TP_{Learn}(t) von DU mit einem M2_{Start} in ein SP_{LearnOut}(x₁,...,x_{N}) gewandelt wird und wobei drittens der von TM überwachte Lernalgorithmus (LA) durch iterative Verstellung von M2 über Signale an DUC eine der unverschlüsselten spatialen Eingangsfunktion SP_{LearnIn}(x₁,...,x_{N}) hinreichend ähnliche spatiale Ausgangsfunktion SPₒᵤₜ (x₁,...,x_{N}) bewirkt, dass e) ein Modulation Vector (MV) an EUC den Betrieb von EU mitbestimmt, an DUC den Betrieb von DU mitbestimmt und den Tuning Betrieb von TM mitbestimmt, wobei MV die ST-Filter Information (STI) umfasst.

3. Safe Communication System nach Anspruch 2, **gekennzeichnet dadurch, dass** ein Normal-Betriebszustand F-Operation vorgesehen ist, wobei erstens EU mit einem Modulation Vector MVⱼ aktiviert wird, wobei zweitens ein Spatial Pattern SPₖ mit M1ⱼ in ein zugehöriges TPⱼₖ (t) gewandelt und an DU weitergeleitet wird, wobei drittens DU durch den gleichen Modulation Vector MVj aktiviert wird und wobei viertens DU mit M2ⱼ ein spatiales Ausgangspattern SP_{kOut} (x₁,...,x_{N}) mit hinreichend grosser Ähnlichkeit zu dem unverschlüsselten Ursprungspattern SPₖ (x₁,...,x_{N}) erzeugt.

4. Safe Communication System nach einem der Ansprüche 1 bis 3 **gekennzeichnet dadurch, dass** spatiale und temporale Parameter der Abbildungsfunktion eines ST-Filters von Ortsfunktionen SP am Eingang in Zeitfunktionen TP am Ausgang durch Signale an EUC festgelegt werden.

5. Safe Communication System nach einem der vorhergehenden Ansprüche **gekennzeichnet dadurch, dass** der Algorithmus der Abbildungsfunktion eines ST-Filters unabhängig von den zugehörigen spatialen und temporalen Parametern festgelegt wird.

6. Safe Communication System nach einem der vorhergehenden Ansprüche **gekennzeichnet dadurch, dass** EU einen von EUC empfangenen MV den in EM betriebenen ST-Filtern anteilig als spatiale und temporale Parameter zuordnet und dass EM die Ausgangszeitfunktionen der ST-Filter an einen Pattern Transmitter Module (PT) übergibt.

7. Safe Communication System nach einem der vorhergehenden Ansprüche **gekennzeichnet dadurch, dass** eine Freischaltung des EU-Betriebes nur bei Eingabe eines geeigneten MV an EUC erfolgt.

8. Safe Communication System nach einem der vorhergehenden Ansprüche **gekennzeichnet dadurch, dass** erstens in EU ein Pattern Transmitter Modul (PT) vorgesehen ist und dass zweitens in DU ein Pattern Receiver Modul (PR) vorgesehen sind, wobei zwischen PT und PR ein gemeinsamer, exklusiver Communication Channel (CC) für die TP(t)-Übertragung von EU nach DU vorgesehen ist.

9. Safe Communication System nach einem der vorhergehenden Ansprüche **gekennzeichnet dadurch, dass** die Decryption Unit (DU) einen Pattern Receiver (PR) mit einer Schnittstelle zu Zeitfunktionen ohne Ortsfunktions-Anteile, einer separaten Eingangs-Schnittstelle zur PR-Steuerung (PRC) und ein Authentifizierungsmodul (AM) und ein Sortiermodul (SM) umfasst.

10. Verfahren zum Betreiben eines Safe Communication Systems nach einem der vorherigen Ansprüche, **gekennzeichnet dadurch, dass** MV(t) von einer zugangsberechtigten Person festgelegt wird.

11. Verfahren zum Betreiben eines Safe Communication Systems nach Anspruch 10 **gekennzeichnet dadurch, dass** ein Biosignalmodul (BM) zur reproduzierbaren Umsetzung von Biosignalen der Benutzer-Person in MV vorgesehen ist.

12. Verfahren zum Betreiben eines Safe Communication Systems nach einem der vorhergehenden Ansprüche, **gekennzeichnet dadurch, dass** erstens ein vorhandener Datensatz MV in einer der Vorrichtungseinheiten: EU, DU, TM entfernt bzw. gelöscht werden kann und dass zweitens die Entfernung bzw. Löschung von MV in einer der Vorrichtungseinheiten: EU, DU, TM deren Betrieb bzw. die laufende Funktion einer Vorrichtungseinheit unterbricht, oder in einen Halte- bzw. Wartebetriebszustand überführt.

13. Verfahren zum Betreiben eines Safe Communication Systems nach einem der vorhergehenden Ansprüche, **gekennzeichnet dadurch, dass** zur Anwendung in einer Neuroprothese als aktivem Medizinprodukt mit einer externen, ausserhalb des Körpers befindlichen Komponente (EK) und einer implantierten Komponente (IK) erstens beiden Komponenten, EK und IK zum Personen-spezifisch authorisierten Betrieb und zur Authentifizierung für einen Datenaustausch separat ein Datensatz MV bereitgestellt wird, wobei der authorisierte Betrieb von mindestens einer der zwei Komponenten EK, IK einer Neuroprothese nur erfolgt, wenn und solange wie MV bereitgestellt wird.

14. Verfahren zum Betreiben eines Safe Communication Systems nach einem der vorhergehenden Ansprüche, **gekennzeichnet dadurch, dass** ein verschlüsseltes temporales Pattern TP(t) des spatial Pattern's SP auf einem Datenträger / Speicher für Zeitfunktionen gespeichert wird und bei Bedarf mithilfe einer DU Vorrichtung und in Kenntnis von MV wieder in das korrespondierende SP rückgewandelt wird.

15. Verfahren zum Betreiben eines Safe Communication Systems (SCS) nach einem der vorhergehenden Ansprüche, **gekennzeichnet dadurch, dass** erstens SCS-Module und Verfahren mit Vorrichtungen zur Visualisierung bzw. Reproduktion von Bildmustern, insbesondere mit Druckern, Kopierautomaten, Video Beamern und ,Electronic Paper' gekoppelt werden und dass zweitens die entschlüsselte (Klartext) Visualisierung eines spatial Pattern's SP auf diesen Vorrichtungen zur Visualisierung bzw. Reproduktion von Bildmustern eine Decryption bzw. Authentifizierung über DU mit MV erfordert.
